# EUROPEAN PATENT APPLICATION

(11) **EP 4 782 821 A1**
(43) Date of publication of application: **29.07.2026**
(21) Application number: 25861693.7
(22) Date of filing: 10.09.2025
(51) Int. Cl.: G01N 21/892, G01N 21/89, G01B 11/02, H01M 10/04

(54) **BATTERY INSPECTION DEVICE, BATTERY INSPECTION METHOD, AND BATTERY MANUFACTURING SYSTEM**

(30) Priority: 12.12.2024 KR 20240184389
(71) Applicant: LG ENERGY SOLUTION, LTD., Seoul 07335 (KR)
(72) Inventor: YU, Jong Seon, Yuseong-gu Daejeon 34122 (KR); KIM, Tae Young, Yuseong-gu Daejeon 34122 (KR); KO, Hong Jae, Yuseong-gu Daejeon 34122 (KR); JEON, Su In, Yuseong-gu Daejeon 34122 (KR); CHOI, Jae Ho, Yuseong-gu Daejeon 34122 (KR)
(74) Representative: Goddar, Heinz J.
(86) International application number: PCT/KR2025/014069
(87) International publication number: WO 2026/127284

(57) **Abstract**

According to some embodiments, a battery inspection device includes a photographing unit configured to photograph a feed state of a negative electrode being fed toward a winding core to form a jelly roll of a cylindrical battery cell and generate a negative electrode feed-state image and a processing unit configured to measure a first distance indicating the feed state of the negative electrode based on the negative electrode feed-state image, calculate a negative electrode feed amount index indicating a feed amount of the negative electrode based on the first distance, and diagnose a winding state of the jelly roll based on the negative electrode feed amount index.

## Description

### TECHNICAL FIELD

### CROSS-REFERENCE TO RELATED APPLICATIONS

This application claims priority from Korean Patent Application No. 10-2024-0184389, filed on December 12, 2024, the disclosure of which is incorporated by reference herein.

### TECHNICAL FIELD

Embodiments disclosed herein relate to a battery inspection device, a battery inspection method, and a battery manufacturing system.

### BACKGROUND ART

In recent years, research and development for secondary batteries have been actively conducted. Here, secondary batteries are batteries capable of being recharged and discharged, and may be interpreted to encompass both conventional Ni/Cd batteries, Ni/MH batteries, or the like, and recent lithium ion batteries. Among secondary batteries, lithium ion batteries may have a higher energy density than conventional Ni/Cd batteries, Ni/MH batteries, or the like, and may be manufactured to be small and lightweight, so the lithium ion batteries may have high usability as a power source for mobile devices. In recent years, the lithium ion batteries have expanded their range of use to power sources for electric vehicles, making the batteries attract attention as a next-generation energy storage medium.

A jelly roll of a cylindrical battery cell may be manufactured by winding battery electrodes and a separator together. The quality of the jelly roll may vary depending on a state in which the electrodes and the separator are fed toward a winding device. For example, relative positional differences of a negative electrode, a positive electrode, and the separator when they are fed toward a winding core may lead to variations in the internal structure of the wound jelly roll. Since internal structural defects such as separator damage may occur when manufacturing parameters indicating the relative positional differences are outside a normal range, it may be necessary to continuously monitor the relative positional differences when the negative electrode, the positive electrode, and the separator are fed toward the winding core.

### DISCLOSURE OF THE INVENTION

### TECHNICAL PROBLEM

One of the objects of the embodiments disclosed herein includes providing a battery inspection device, a battery inspection method, and a battery manufacturing system capable of monitoring relative positional differences when a negative electrode, a positive electrode, and a separator are fed toward a winding core in a non-destructive manner through a photographing means.

The technical objectives of the embodiments disclosed herein are not limited to those mentioned above, and other technical objectives not mentioned will be clearly understood by those skilled in the art from the following descriptions.

### TECHNICAL SOLUTION

According to some embodiments, a battery inspection device includes a photographing unit configured to photograph a feed state of a negative electrode being fed toward a winding core to form a jelly roll of a cylindrical battery cell and generate a negative electrode feed-state image and a processing unit configured to measure a first distance indicating the feed state of the negative electrode based on the negative electrode feed-state image, calculate a negative electrode feed amount index indicating a feed amount of the negative electrode based on the first distance, and diagnose a winding state of the jelly roll based on the negative electrode feed amount index.

According to some embodiments, the processing unit may be configured to calculate the first distance by applying a conversion coefficient to a pixel distance between a first pixel representing a leading end of the negative electrode and a second pixel representing the winding core in the negative electrode feed-state image.

According to some embodiments, the processing unit may be configured to calculate the negative electrode feed amount index by adding, to the first distance, a second distance from a separator cutting unit configured to cut a first separator fed between the positive electrode and the negative electrode toward the winding core to form the jelly roll to the winding core.

According to some embodiments, the processing unit may be configured to determine a first state as to whether a length of the negative electrode has a safety margin relative to a length of a positive electrode in the jelly roll based on the negative electrode feed amount index and diagnose the winding state of the jelly roll based on the first state.

According to some embodiments, the processing unit may be configured to determine a second state as to whether a separator triple overlapping region is ensured in the jelly roll based on the negative electrode feed amount index and diagnose the winding state of the jelly roll based on the second state.

According to some embodiments, the photographing unit may be configured to photograph the feed state in a direction facing the negative electrode before the negative electrode, the first separator, the positive electrode, and the second separator are fed toward the winding core.

According to some embodiments, the photographing unit may be configured to photograph the feed state based on a photographing trigger signal generated each time a motor for rotating the winding core rotates by a preset angle.

According to some embodiments, a battery inspection method includes photographing, through a photographing unit, a feed state of a negative electrode being fed toward a winding core to form a jelly roll of a cylindrical battery cell and generating a negative electrode feed-state image, measuring, through a processing unit, a first distance indicating the feed state of the negative electrode based on the negative electrode feed-state image, calculating, through the processing unit, a negative electrode feed amount index indicating a feed amount of the negative electrode based on the first distance, and diagnosing, through the processing unit, a winding state of the jelly roll based on the negative electrode feed amount index.

According to some embodiments, the measuring of the first distance may include calculating the first distance by applying a conversion coefficient to a pixel distance between a first pixel representing a leading end of the negative electrode and a second pixel representing the winding core in the negative electrode feed-state image.

According to some embodiments, the calculating of the negative electrode feed amount index may include calculating the negative electrode feed amount index by adding, to the first distance, a second distance from a separator cutting unit configured to cut a first separator fed between a positive electrode and the negative electrode toward the winding core to form the jelly roll to the winding core.

According to some embodiments, the diagnosing of the winding state of the jelly roll may include determining a first state as to whether a length of the negative electrode has a safety margin relative to a length of a positive electrode in the jelly roll based on the negative electrode feed amount index and diagnosing the winding state of the jelly roll based on the first state.

According to some embodiments, the diagnosing of the winding state of the jelly roll may include determining a second state as to whether a separator triple overlapping region is ensured in the jelly roll based on the negative electrode feed amount index and diagnosing the winding state of the jelly roll based on the second state.

According to some embodiments, the generating of the negative electrode feed-state image may include photographing the feed state in a direction facing the negative electrode before the negative electrode, the first separator, the positive electrode, and the second separator are fed toward the winding core.

According to some embodiments, the photographing of the feed state may include photographing the feed state based on a photographing trigger signal generated each time a motor for rotating the winding core rotates by a preset angle.

According to some embodiments, a battery manufacturing system includes a feeding device configured to feed a negative electrode toward a winding core to form a jelly roll of a cylindrical battery cell, a battery inspection device configured to generate a negative electrode feed-state image by photographing a feed state of the negative electrode, measure a first distance indicating the feed state of the negative electrode based on the negative electrode feed-state image, calculate a negative electrode feed amount index indicating a feed amount of the negative electrode based on the first distance, and diagnose a winding state of the jelly roll based on the negative electrode feed amount index, and a winding device configured to form the jelly roll.

### ADVANTAGEOUS EFFECTS

According to embodiments disclosed herein, it is possible to provide a battery inspection device, a battery inspection method, and a battery manufacturing system capable of monitoring relative positional differences when a negative electrode, a positive electrode, and a separator are fed toward a winding core in a non-destructive manner through a photographing means.

The technical effects according to the embodiments disclosed herein are not limited to those mentioned above, and other effects not mentioned will be clearly understood by those skilled in the art from the disclosure herein.

### BRIEF DESCRIPTION OF THE DRAWINGS

FIG. 1 illustrates a method in which a battery manufacturing system operates according to some embodiments.
FIG. 2 illustrates elements constituting a battery inspection device according to some embodiments.
FIG. 3 illustrates a method for forming a jelly roll using a winding device according to some embodiments.
FIGS. 4 and 5 illustrate a structure in which a photographing means according to some embodiments photographs a feed state of a negative electrode.
FIG. 6 illustrates a method for calculating a negative electrode feed amount index according to some embodiments.
FIG. 7 illustrates a negative electrode feed-state image generated by photographing the feed state of the negative electrode according to some embodiments.
FIG. 8 illustrates comparison results for estimated values and actually measured values of the negative electrode feed amount index according to some embodiments.
FIG. 9 illustrates steps constituting a battery inspection method according to some embodiments.

### MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments of the present disclosure and the terms used therein are not intended to limit the technological features set forth herein to a particular embodiment and include various changes, equivalents, or replacements in corresponding embodiments. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," "first," "second," "A." "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two operator devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

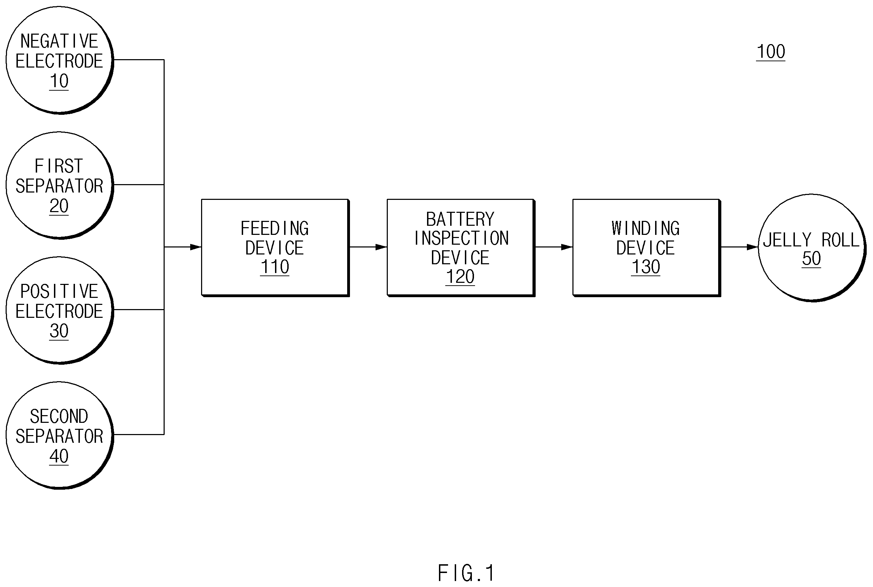

FIG. 1 illustrates a method in which a battery manufacturing system operates according to some embodiments.

Referring to FIG. 1, a battery manufacturing system 100 may form a jelly roll 50 by winding a negative electrode 10, a first separator 20, a positive electrode 30, and a second separator 40, and during this process, the internal structure of the jelly roll 50 may be inspected. To this end, the battery manufacturing system 100 may include a feeding device 110, a battery inspection device 120, and a winding device 130.

The feeding device 110 may feed the negative electrode 10, the first separator 20, the positive electrode 30, and the second separator 40 toward the winding core through roller rotation or the like. The negative electrode 10 and the positive electrode 30 may be fed toward the winding device 130 in the form of an electrode roll and may be cut to the amount required for forming the jelly roll 50. The first separator 20 and the second separator 40 may also be fed toward the winding core through the feeding device 110 and cut to the amount required for forming the jelly roll 50. The battery manufacturing system 100 may further include an electrode cutting unit and a separator cutting unit.

The battery inspection device 120 may predict a winding state of the jelly roll 50 in advance at a time point before the negative electrode 10, the first separator 20, the positive electrode 30, and the second separator 40 to be fed toward the winding core are wound by the winding device 130. The winding state of the jelly roll 50 may be diagnosed based on a state in which the negative electrode 10, the first separator 20, the positive electrode 30, and the second separator 40 are fed toward the winding core or an arrangement state of the feed materials. Whether the internal structure of the jelly roll 50 is properly formed may be determined based on a feeding order, positional relationship, relative feeding positions of the feed materials, and the like. For example, the internal structure of the jelly roll 50 may be normal when an amount by which the first separator 20 is fed toward the winding core prior to the negative electrode 10 falls within a specific range, and the negative electrode 10 is fed toward the winding core before the positive electrode 30. The battery inspection device 120 may include an image generation means such as a camera and the like to analyze the feeding order, positional relationships, and relative feeding positions of feed materials.

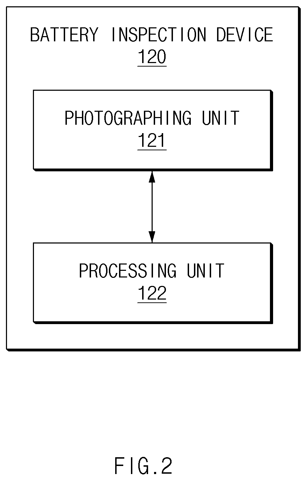

FIG. 2 illustrates elements constituting a battery inspection device according to some embodiments.

Referring to FIG. 2, the battery inspection device 120 may include a photographing unit 121 and a processing unit 122. However, the battery inspection device is not limited thereto, and some components may be omitted from the battery inspection device 120, or other general-purpose components may be further included in the battery inspection device 120.

The photographing unit 121 may include a photographing means such as a camera, an image sensor, and the like, and the processing unit 122 may include a memory and a processor. The processor may process functions of the battery inspection device 120 by executing instructions stored in the memory. For example, the memory may be implemented in the form of a non-volatile device such as a read only memory (ROM), a volatile device such as a random-access memory (RAM), a hard disk drive (HDD), a solid-state drive (SSD), Secure Digital (SD), Micro-SD, or a combination thereof. The processor may be implemented in the form of at least one of a microprocessor, a central processing unit (CPU), a graphics processing unit (GPU), and an application processor (AP).

The photographing unit 121 may be configured to photograph the feed state of the negative electrode being fed toward the winding core to form the jelly roll of the cylindrical battery cell and generate a negative electrode feed-state image. The photographing in the feed state may be performed before the negative electrode is fed toward the winding core. The feed state of the feed materials may determine the internal structure of the jelly roll.

The processing unit 122 may be configured to measure a first distance indicating the feed state of the negative electrode based on the negative electrode feed-state image. The first distance may be measured based on pixels of the negative electrode feed-state image. The first distance may represent a difference between a feed amount of the first separator and a feed amount of the negative electrode. The first distance may be determined based on a difference between a position of the winding core and a position of a leading end of the negative electrode at the moment when the first separator and the second separator corresponding to each jelly roll are cut.

The processing unit 122 may be configured to calculate a negative electrode feed amount index indicating a feed amount of the negative electrode based on the first distance. The negative electrode feed amount index may be used as a reference to represent the difference between the feed amount of the first separator and the feed amount of the negative electrode. The negative electrode feed amount index may be calculated based on a value determined by the first distance and the equipment specifications of the battery manufacturing system 100.

The processing unit 122 may be configured to diagnose the winding state of the jelly roll based on the negative electrode feed amount index. Based on results of repeated jelly roll manufacturing using the battery manufacturing system 100, it may be confirmed that the internal structure of the jelly roll is inappropriate when the negative electrode feed amount index deviates from a predetermined range. Taking this into account, the winding state of the jelly roll may be predicted in a non-destructive manner based on whether the negative electrode feed amount index falls within a normal range. When the winding state of the jelly roll is predicted, a process state of the battery manufacturing system 100 may be changed based on the prediction, or a notification and/or warning may be provided to a user. For example, when the process state is diagnosed as defective, the processing unit 122 may generate a process stop signal for the battery manufacturing system 100 so that the arrangement state of the winding materials may be adjusted, and a warning/notification regarding the defective arrangement state may be provided to a process manager.

According to an embodiment, the processing unit 122 may be configured to calculate the first distance by applying a conversion coefficient to a pixel distance between a first pixel representing the leading end of the negative electrode and a second pixel representing the winding core in the negative electrode feed-state image. The pixel distance between the first pixel and the second pixel may be converted into an actual distance between the leading end of the negative electrode and the winding core through a conversion coefficient.

According to an embodiment, the processing unit 122 may be configured to calculate the negative electrode feed amount index by adding, to the first distance, a second distance from a separator cutting unit, which is configured to cut the first separator fed between the positive electrode and the negative electrode toward the winding core to form the jelly roll, to the winding core. The second distance may be a value related to the equipment specifications of the battery manufacturing system 100, and among them, a distance between the separator cutting unit and the winding core may be utilized. The second distance may be a fixed value regardless of a progress state of a feeding process and/or a winding process. A sum of the first distance and the second distance may represent a difference between a feeding position of the first separator and that of the negative electrode, or a difference between feed amounts.

According to an embodiment, the processing unit 122 may be configured to determine a first state as to whether a length of the negative electrode has a safety margin relative to a length of the positive electrode in the jelly roll based on the negative electrode feed amount index, and to diagnose the winding state of the jelly roll based on the first state. In the fully wound jelly roll, when the length of the fed negative electrode is not greater than the length of the fed positive electrode, problems may arise in the performance or stability of the cylindrical cell. In order to prevent the problems, the length of the negative electrode is required to have a safety margin relative to the length of the positive electrode, and the value of the safety margin may be determined based on the negative electrode feed amount index. A relationship between the safety margin and the feed amount index may be established based on statistical data on results of jelly roll manufacturing through the battery manufacturing system 100. Based on the negative electrode feed amount index, a determination as to whether the value of the safety margin falls within a normal range may be made.

According to an embodiment, the processing unit 122 may be configured to determine a second state as to whether a separator triple overlapping region is ensured in the jelly roll based on the negative electrode feed amount index, and to diagnose the winding state of the jelly roll based on the second state. The separator triple overlapping region may be formed at a leading end portion of the positive electrode in the jelly roll by the operation of the winding device 130. For example, when the positive electrode is formed of a metal material such as aluminum, an end portion of the positive electrode may be formed to have a sharp edge due to cutting, which may cause damage to the separator. To prevent this, the winding of the materials may be designed so that the separator triple overlapping region is formed at the leading end portion of the positive electrode. The formation of the separator triple overlapping region may be determined based on the negative electrode feed amount index. The relationship between the two may be established based on statistical data on the manufacturing of cylindrical cells. Based on the negative electrode feed amount index, a determination as to whether the separator triple overlapping region is formed in the normal region may be made.

According to an embodiment, the photographing unit 121 may be configured to photograph the feed state in a direction facing the negative electrode before feeding the negative electrode, the first separator, the positive electrode, and the second separator toward the winding core. When photographed in the direction facing the negative electrode, the positive electrode and the second separator may be obscured by the first separator, but the position of the negative electrode may be shown on the first separator. The positional relationship or arrangement state of the negative electrode and the first separator may be utilized to estimate the winding state of the jelly roll, and in order to confirm this, the photographing unit 121 may photograph the feed state at a position where the negative electrode is visible.

According to an embodiment, the photographing unit 121 may be configured to photograph the feed state based on a photographing trigger signal generated each time a motor for rotating the winding core rotates by a preset angle. A photographing time point may be important to accurately confirm the positional relationship or arrangement state of the negative electrode and the first separator. A rotation angle of the winding core may be used as a reference to accurately set the photographing time point. Images may be generated at intervals of the preset angle, and the image captured at the most appropriate time point may be utilized to analyze the positional relationship or arrangement state of the negative electrode and the first separator. For example, the preset angles may be 60 degrees, 90 degrees, 120 degrees, or the like.

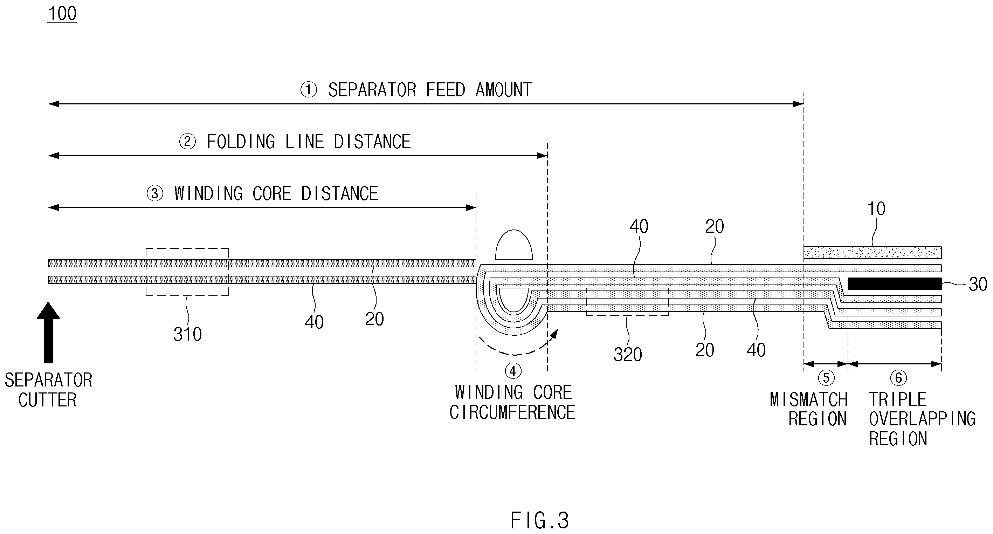

FIG. 3 illustrates a method for forming a jelly roll using a winding device according to some embodiments.

Referring to FIG. 3, a method for forming a jelly roll using a winding device in the battery manufacturing system 100 may be illustrated.

When the first separator 20 and the second separator 40 are cut by a separator cutter, the first separator 20 and the second separator 40 may be moved from a first position 310 close to the separator cutter to a second position 320 close to the negative electrode 10 and the positive electrode 30 on the opposite sides thereof. In a region of the second position 320, winding may be performed by rotation of the winding core in a state in which the first separator 20 and the second separator 40 partially overlap each other.

In a state illustrated before the negative electrode 10 and the positive electrode 30 are fed toward the winding core, various indices may be utilized for estimating the internal structure of the jelly roll after completion of winding. For example, the indices utilized for estimating the winding state may include a separator feed amount, a folding line distance, a winding core distance, a winding core circumference, a mismatch region, and a triple overlapping region.

The folding line distance may be a distance from the position of the separator cutter to the folding line of the feed materials, and the winding core distance may be a distance from the position of the separator cutter to the winding core. The separator feed amount may be a distance obtained by adding the first distance to the folding line distance or the winding core distance. The first distance may be a distance between the winding core and the leading end of the negative electrode. These distances may be measured before the rotation of the winding core begins, or at a time point where a certain amount of rotation of the winding core has been performed.

The winding core circumference may be a circumference along which the first separator 20 and the second separator 40 are wound around the winding core, and may be used as an auxiliary means for estimating the winding state. The mismatch region and the triple overlapping region may be determined by the arrangement relationship of the negative electrode 10 and the positive electrode 30. The separator feed amount may be related to the formation of the triple overlapping region. Only when the separator feed amount falls within an appropriate range, the triple overlapping region may be properly formed at the end portion of the positive electrode 30. When the triple overlapping region is not formed, the performance or stability of the cylindrical cell may be degraded due to damage such as tearing of the separator. Therefore, in order to determine whether the separator feed amount falls within an appropriate range, the battery inspection device 120 may measure the first distance between the winding core and the leading end of the negative electrode. Meanwhile, with respect to the mismatch region, the negative electrode 10 may need to be fed earlier than the positive electrode 30, and it may be necessary to ensure a safety margin for a difference in feed amount.

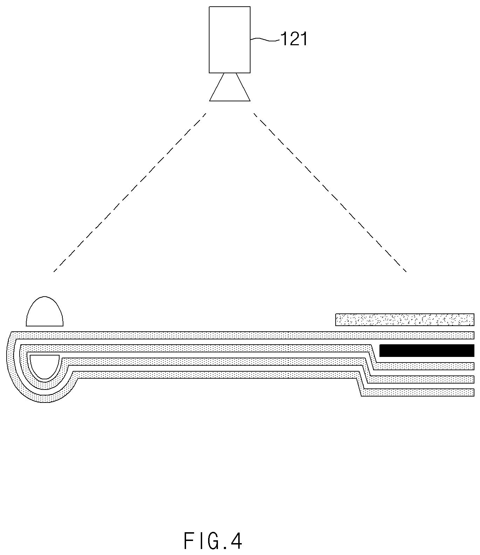

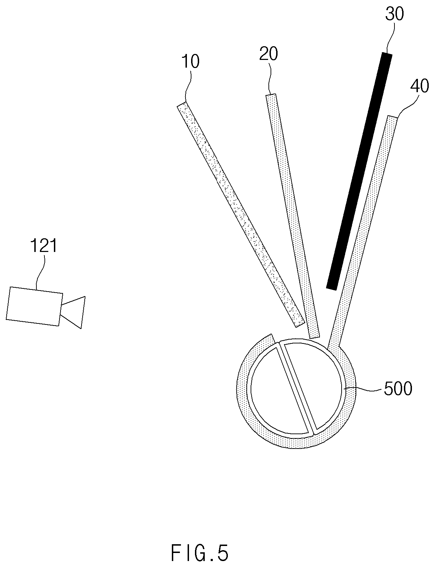

FIGS. 4 and 5 illustrate a structure in which a photographing means according to some embodiments photographs a feed state of the negative electrode.

Referring to FIG. 4, the photographing means 121 may be installed at a position where it may photograph the negative electrode 10 being fed toward a winding core 500 to photograph the feed state of the negative electrode 10. Referring to FIG. 5, the photographing means 121 may photograph feed materials in a direction facing the negative electrode 10, and may photograph the feed state at a time point before the negative electrode 10 enters the winding core 500.

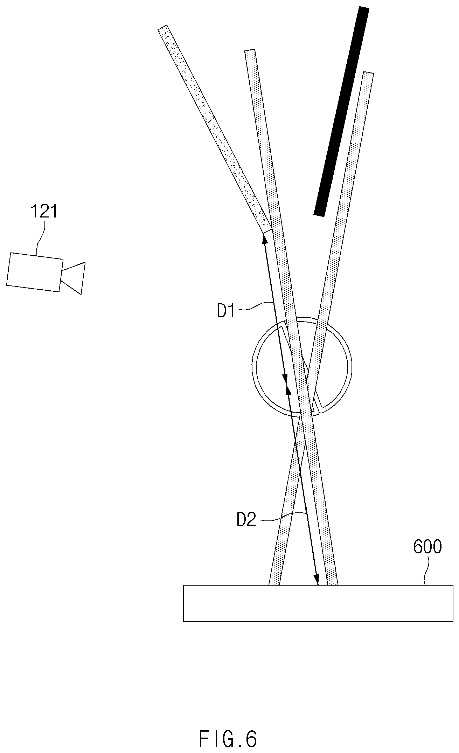

FIG. 6 illustrates a method for calculating a negative electrode feed amount index according to some embodiments.

Referring to FIG. 6, the negative electrode feed amount index may be calculated based on a first distance D1 and a second distance D2. The first distance D1 may be calculated based on a negative electrode feed-state image generated by the photographing unit 121. The negative electrode feed amount index may be calculated by adding the second distance D2 to the first distance D1. The second distance D2 is a distance between a separator cutter 600 and the winding core, and may be a fixed value.

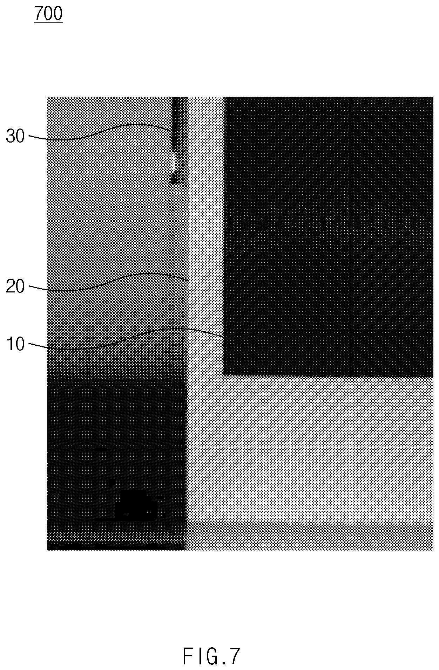

FIG. 7 illustrates a negative electrode feed-state image generated by photographing the feed state of the negative electrode according to some embodiments.

Referring to FIG. 7, a negative electrode feed-state image 700 generated by photographing the feed state of the negative electrode 10 may be illustrated.

In the negative electrode feed-state image 700, the position of the leading end of the negative electrode 10 may be shown on the first separator 20. Based on the negative electrode feed-state image 700, the positional relationship and arrangement state of materials fed for winding may be confirmed. The positional relationship and arrangement state may determine the internal structure and winding state of the jelly roll. Meanwhile, in the negative electrode feed-state image 700, an electrode tab of the positive electrode 30 may be shown on a side surface of the first separator 20. Based on this, the feed state of the positive electrode 30 may be confirmed, and the positional relationship between the negative electrode 10 and the positive electrode 30 may be confirmed.

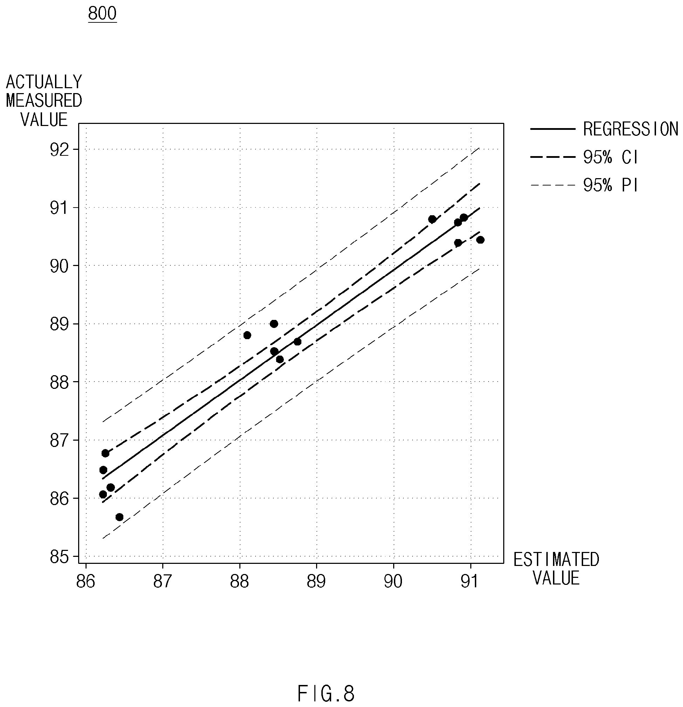

FIG. 8 illustrates comparison results for estimated values and actually measured values of the negative electrode feed amount index according to some embodiments.

Referring to FIG. 8, a graph 800 illustrating the comparison results of the estimated values and actually measured values of the negative electrode feed amount index may be shown. In the graph 800, a horizontal axis may represent an estimated value of the negative electrode feed amount index, and a vertical axis may represent an actually measured value of the negative electrode feed amount index.

In the graph 800, some of the data may fall within a 95% confidence interval (CI), and all of the data may fall within a 95% prediction interval (PI). An R² value for the estimated value and the actually measured value may be approximately 0.95, and accordingly, calculating the negative electrode feed amount index by adding the first distance D1 and the second distance D2 using the battery inspection device 120 may have high reliability.

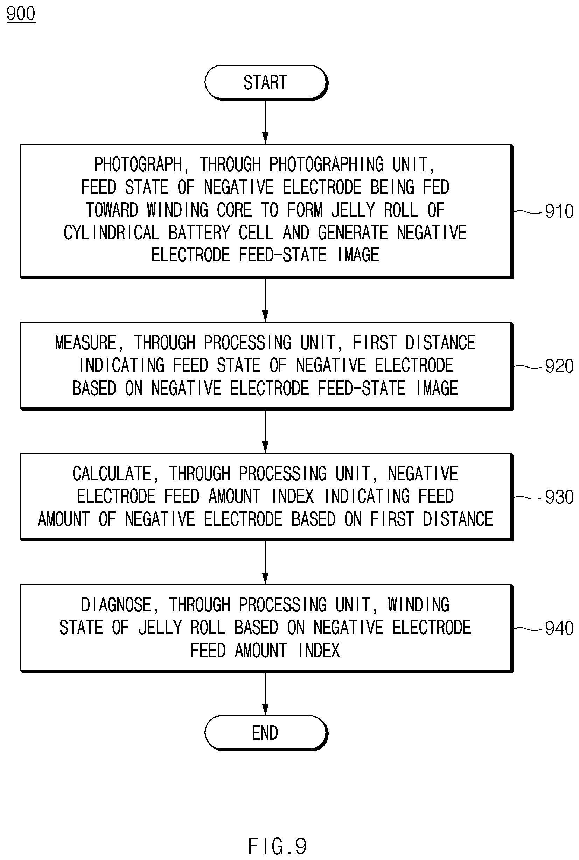

FIG. 9 illustrates steps constituting a battery inspection method according to some embodiments.

Referring to FIG. 9, a battery inspection method 900 may include steps 910 to 940. However, the battery inspection method is not limited thereto, and some steps may be omitted or other general steps may be added, and the steps of the battery inspection method 900 may be executed in a different order than the illustrated order.

The battery inspection method 900 may include steps that are processed in time series in the battery inspection device 120. Therefore, even when the content is omitted below, the content described above for the battery inspection device 120 may be equally applied to the battery inspection method 900.

Steps 910 to 940 of the battery inspection method 900 may be performed by the photographing unit 121 and the processing unit 122 of the battery inspection device 120.

In step 910, the battery inspection device 120 may perform photographing, through the photographing unit, a feed state of a negative electrode being fed toward the winding core to form a jelly roll of a cylindrical battery cell and generating a negative electrode feed-state image.

In step 920, the battery inspection device 120 may perform measuring, through the processing unit, a first distance indicating the feed state of the negative electrode based on the negative electrode feed-state image.

In step 930, the battery inspection device 120 may perform calculating, through the processing unit, a negative electrode feed amount index indicating a feed amount of the negative electrode based on the first distance.

In step 940, the battery inspection device 120 may perform diagnosing, through the processing unit, a winding state of the jelly roll based on the negative electrode feed amount index.

According to an embodiment, the battery inspection method 900 may be implemented in the form of a computer program stored in a computer-readable storage medium. That is, the computer program may include commands for implementing the battery inspection method 900, and the commands of the program may be stored in the computer-readable storage medium. The computer program may include a mobile application.

In an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A battery inspection device comprising:
a photographing unit configured to photograph a feed state of a negative electrode being fed toward a winding core to form a jelly roll of a cylindrical battery cell and generate a negative electrode feed-state image; and
a processing unit configured to:
measure a first distance indicating the feed state of the negative electrode based on the negative electrode feed-state image;
calculate a negative electrode feed amount index indicating a feed amount of the negative electrode based on the first distance; and
diagnose a winding state of the jelly roll based on the negative electrode feed amount index.

2. The battery inspection device of claim 1, wherein the processing unit is configured to calculate the first distance by applying a conversion coefficient to a pixel distance between a first pixel representing a leading end of the negative electrode and a second pixel representing the winding core in the negative electrode feed-state image.

3. The battery inspection device of claim 2, wherein the processing unit is configured to calculate the negative electrode feed amount index by adding, to the first distance, a second distance from a separator cutting unit configured to cut a first separator fed between a positive electrode and the negative electrode toward the winding core to form the jelly roll to the winding core.

4. The battery inspection device of claim 1, wherein the processing unit is configured to:
determine a first state as to whether a length of the negative electrode has a safety margin relative to a length of a positive electrode in the jelly roll based on the negative electrode feed amount index; and
diagnose the winding state of the jelly roll based on the first state.

5. The battery inspection device of claim 1, wherein the processing unit is configured to:
determine a second state as to whether a separator triple overlapping region is ensured in the jelly roll based on the negative electrode feed amount index; and
diagnose the winding state of the jelly roll based on the second state.

6. The battery inspection device of claim 1, wherein the photographing unit is configured to photograph the feed state in a direction facing the negative electrode before the negative electrode, the first separator, the positive electrode, and the second separator are fed toward the winding core.

7. The battery inspection device of claim 6, wherein the photographing unit is configured to photograph the feed state based on a photographing trigger signal generated each time a motor for rotating the winding core rotates by a preset angle.

8. A battery inspection method comprising:
photographing, through a photographing unit, a feed state of a negative electrode being fed toward a winding core to form a jelly roll of a cylindrical battery cell and generating a negative electrode feed-state image;
measuring, through a processing unit, a first distance indicating the feed state of the negative electrode based on the negative electrode feed-state image;
calculating, through the processing unit, a negative electrode feed amount index indicating a feed amount of the negative electrode based on the first distance; and
diagnosing, through the processing unit, a winding state of the jelly roll based on the negative electrode feed amount index.

9. The battery inspection method of claim 8, wherein the measuring of the first distance includes calculating the first distance by applying a conversion coefficient to a pixel distance between a first pixel representing a leading end of the negative electrode and a second pixel representing the winding core in the negative electrode feed-state image.

10. The battery inspection method of claim 9, wherein the calculating of the negative electrode feed amount index includes calculating the negative electrode feed amount index by adding, to the first distance, a second distance from a separator cutting unit configured to cut a first separator fed between a positive electrode and the negative electrode toward the winding core to form the jelly roll to the winding core.

11. The battery inspection method of claim 8, wherein the diagnosing of the winding state of the jelly roll includes:
determining a first state as to whether a length of the negative electrode has a safety margin relative to a length of a positive electrode in the jelly roll based on the negative electrode feed amount index; and
diagnosing the winding state of the jelly roll based on the first state.

12. The battery inspection method of claim 8, wherein the diagnosing of the winding state of the jelly roll includes:
determining a second state as to whether a separator triple overlapping region is ensured in the jelly roll based on the negative electrode feed amount index; and
diagnosing the winding state of the jelly roll based on the second state.

13. The battery inspection method of claim 8, wherein the generating of the negative electrode feed-state image includes photographing the feed state in a direction facing the negative electrode before the negative electrode, the first separator, the positive electrode, and the second separator are fed toward the winding core.

14. The battery inspection method of claim 13, wherein the photographing of the feed state includes photographing the feed state based on a photographing trigger signal generated each time a motor for rotating the winding core rotates by a preset angle.

15. A battery manufacturing system comprising:
a feeding device configured to feed a negative electrode toward a winding core to form a jelly roll of a cylindrical battery cell;
a battery inspection device configured to generate a negative electrode feed-state image by photographing a feed state of the negative electrode, measure a first distance indicating the feed state of the negative electrode based on the negative electrode feed-state image, calculate a negative electrode feed amount index indicating a feed amount of the negative electrode based on the first distance, and diagnose a winding state of the jelly roll based on the negative electrode feed amount index; and
a winding device configured to form the jelly roll.
